Europäisches Patentamt

European Patent Office

Office européen des brevets

(19)

(11) EP 0 611 945 B1

(12) **EUROPÄISCHE PATENTSCHRIFT**

(45) Veröffentlichungstag und Bekanntmachung des Hinweises auf die Patenterteilung:
**19.11.1997 Patentblatt 1997/47**

(51) Int Cl.[6]: **G01B 7/34**

(21) Anmeldenummer: 93102333.7

(22) Anmeldetag: 15.02.1993

(54) **Kraftmikroskop und Verfahren zur Messung von atomaren Kräften in mehreren Richtungen**

Force microscope and method for measuring atomic forces in several directions

Microscope à force et procédé pour mesurer des forces atomiques dans plusieurs directions

(84) Benannte Vertragsstaaten:
**DE FR GB**

(43) Veröffentlichungstag der Anmeldung:
**24.08.1994 Patentblatt 1994/34**

(73) Patentinhaber: **International Business Machines Corporation
Armonk, N.Y. 10504 (US)**

(72) Erfinder:
- **Bayer, Thomas
  W-7032 Sindelfingen (DE)**
- **Greschner, Johann, Dr. Dipl.-Phys.
  W-7401 Pliezhausen 1 (DE)**
- **Nonnenmacher, Martin, Dr. Dipl.-Phys.
  verstorben (DE)**

(74) Vertreter: **Schäfer, Wolfgang, Dipl.-Ing.
IBM Deutschland
Informationssysteme GmbH
Patentwesen und Urheberrecht
70548 Stuttgart (DE)**

(56) Entgegenhaltungen:
EP-A- 0 397 116      EP-A- 0 410 131
EP-A- 0 413 040      EP-A- 0 413 041
EP-A- 0 536 827

- **APPLIED PHYSICS LETTERS, Bd. 57, Nr. 20, 12. November 1990, New York, US, Seiten 2089-2091; G. MEYER et al.: 'Simultaneous measurement of lateral and normal forces with an optical-beam-deflection atomic force microscope'**
- **JOURNAL OF MICROMECHANICAL MICROENGINEERING, Bd. 1, 1991, GB, Seiten 113-125; G. STEMME : 'Resonant silicon sensors'**
- **APPLIED PHYSICS LETTERS, Bd. 54, Nr. 9, 27. Februar 1989, New York, US, Seiten 801-803; M.A. TAUBENBLATT : 'Lateral forces and topography using scanning tunneling microscopy with optical sensing of the tip position'**
- **JOURNAL OF APPLIED PHYSICS, PART i, Bd. 67, Nr. 9, 1. Mai 1990, New York, US, Seiten 4045-4052; W.A. DUCKER et al.: 'Force measurement using an ac atomic force microscope'**

## Beschreibung

Die Erfindung betrifft ein Kraftmikroskop zur Messung der Atomkräfte in mehreren Richtungen.

Sensoren zur Messung von Atomkräften werden seit der Entdeckung des Raster-Tunnelmikroskops im IBM Forschungslabor Rüschlikon bei Zürich durch Binnig und Rohrer in den unterschiedlichsten, meist als Rastermikroskope ausgebildeten Meßinstrumenten verwendet.

Beim Raster-Tunnelmikroskop wird eine winzige Nadel bei Binnig und Rohrer eine Wolframnadel so nahe an eine zu untersuchende Oberfläche herangeführt (ca. 1 nm), daß bei einer angelegten Spannung die Elektronen aus der Wolframnadel den Abstand zur untersuchenden Oberfläche wegen des Tunneleffekts überbrücken können.

Eine Oberfläche kann dann dadurch bildartig vermessen werden, indem man die Nadel in der Ebene gleichen Abstands (x-y-Ebene) verfährt und den Abstand der Nadelspitze zur Oberfläche (z-Richtung) dann noch mit Hilfe eines Stellgliedes innerhalb einer geschlossenen Meßschleife so nachführt, daß der gemessene Elektronenstrom konstant ist.

Der Vorteil dieser neuen Art der Mikroskopie liegt in erster Linie einmal darin, daß im Gegensatz zum herkömmlichen "Fernfeld-Mikroskop", bei dem die Auflösung nach Abbé auf die halbe Wellenlänge der verwendeten Strahlung begrenzt ist, es sich beim Raster-Tunnel- und Raster-Kraftmikroskop um ein "Nahfeld-Mikroskop" handelt, das nicht durch die "Wellenlänge" einer verwendeten Wechselwirkung in seiner Auflösung begrenzt wird.

Das Auflösungsvermögen in z-Richtung liegt im Bereich eines Pikometers, während die Bildauflösung in x-y-Richtung, die in erster Linie von der Genauigkeit der Zeilenführung der Nadel abhängt, bei ca. 0,2 nm liegt.

Das Raster-Tunnelmikroskop ist bekannterweise jedoch mit einer Reihe von Nachteilen behaftet. Einerseits ist eine Vermessung nicht bezüglich der Oberflächenstruktur nicht im konventionellen Sinne einer Bildfläche möglich, sondern nur bezüglich der Fläche gleicher Übergangswahrscheinlichkeiten der Elektronen der Nadelspitze zur zu untersuchenden Oberfläche hin. Bei Materialen, die an ihrer Oberfläche nur aus gleichen Atomen bestehen, entspricht das Bild der Elektronenübergangswahrscheinlichkeit (Tunnelwahrscheinlichkeit) in etwa der optisch bildhaften Oberfläche. Wenn aber die Oberfläche aus einem Material mit verschiedenen Atomen (z.B. einem mehratomigen Kristall) besteht, so entsteht ein Bild der elektrischen Eigenschaften der Oberfläche anstelle eines Bildes der optischen Eigenschaften bei einem herkömmlichen, optischen Mikroskop.

Während die vorgenannte Eigenschaft des Raster-Tunnelmikroskops jedoch nicht notwendigerweise einen Nachteil darstellen muß, da gerade von den elektrischen Eigenschaften der Oberfläche hervorragende Aussagen über deren Qualität, insbesondere bezüglich Fehlstellen etc, ableitbar sind, ist die Anwendbarkeit dieses Instruments jedoch auf elektrisch leitende Oberflächen beschränkt. Zwar hat man Versuche angestellt, die Oberfläche auch von ursprünglich nicht leitenden Materialien - insbesondere organischen Substanzen - durch Eintauchen in eine Leitflüssigkeit zwangsweise leitfähig zu machen, jedoch ist dies wiederum mit offensichtlichen Nachteilen verbunden, insbesondere wenn die zu untersuchende Oberfläche eben die Eigenschaft einer Isolation haben und behalten soll, wie zum Beispiel bei einer mit einer isolierenden Oxidschicht versehenen Siliziumfläche.

Ein weiterer Nachteil des Raster-Tunnelmikroskops ist die Tatsache, daß der zur Messung notwendige Elektronenstrom die Oberfläche verändern kann, z.B. kann die Molekülstruktur durch den Strom aufgespalten werden. Dies mag bei einem Einsatz als Werkzeug zur Oberflächenbehandlung ein erwünschter Effekt sein, für eine zerstörungsfreie Messung ist es aber ein unerwünschter Effekt.

Ausgehend von den genannten Problemen wurde schon 1985 - ebenfalls im IBM Forschungslabor Rüschlikon das Abstoßungskraft-Mikroskop (im Englischen atomic force microscope, AFM) vorgeschlagen. Bei diesem aus Binnig, Quate und Gerbar, Phys. Rev. Letters, 56, 930 (1986) bekannten AFM wird die Abstoßungskraft einer nichtleitenden Spitze (z.B. aus Diamant) gegenüber der Oberfläche vermessen, indem man die Spitze mit Hilfe einer Federkraft gegen die Oberfläche drückt. Mehrere Nachteile des Raster-Tunnelmikroskops werden in dieser Sensoranordnung bereits überwunden. Insbesondere ist es möglich, auch nichtleitende Oberflächen zu vermessen, und die Abstoßungskraft einer nichtleitenden Oberfläche entspricht eher dem optischen Bild als die Ebene gleicher Übergangswahrscheinlichkeit nach dem Tunneleffekt.

Ein erheblicher Nachteil des Raster-Tunnelmikroskops ist beim AFM allerdings nicht behoben sondern unter Umständen sogar verstärkt. Die Messung der Abstoßungskraft selbst ist nämlich dazu geeignet, die Oberfläche - z.B. durch Eindrücken der Oberflächenatome in tiefere Ebenen, durch Kontamination und Ablagerung von Schmutzresten in der Nähe der Oberfläche etc. - zu beschädigen.

Ausgehend von diesem Problem wurde im IBM Labor Yorktown das Laser-Kraftmikroskop entwickelt. Diese Art von Kraftmikroskopen benutzt im Gegensatz zum AFM langreichweitige "schwache" Wechselwirkungen , wie z.B. die van-der-Waals-Kräfte. Die Kräfte und damit auch die Belastung der Oberfläche sind um mehrere Größenordnungen kleiner als beim AFM.

Das eigentliche Meßprinzip des Laser-Kraftmikroskops liegt nun darin, die Sonde z.B. mit Hilfe eines piezoelektrischen Wandlers bei oder in der Nähe einer Schwingungsresonanz der Sonde anzuregen und die von der Oberfläche herrührenden Kräfte dadurch zu vermessen, daß der Einfluß der Kraft auf die Resonanzfrequenz beobachtet wird.

EP 0 611 945 B1

Die Messung kann dabei entweder dadurch bewirkt werden, daß die Anregungsfrequenz der effektiven Resonanzfrequenz nachgeführt wird und die Frequenzverschiebung dann als Maß für die von der Oberfläche auf die Sonde einwirkende Kraft dient (Frequenzmodulation) oder aber die Abschwächung der Amplitude dient direkt als Maß für die Frequenzverschiebung.

Während man bei den ersten Ausführungen von Laser-Kraftmikroskopen dünne Woframdrähte verwendete, wurden auch Siliziumnadeln entwickelt, deren Schwingung dann mit Heterodyne-Laservessverfahren ausgemessen wird.

Dieses seit einigen Jahren eingesetzte Meßverfahren hat jedoch den Nachteil, daß die Messung nur eine Komponente der Kraft aufnimmt, nämlich die Projektion des Kraftvektors auf die Achse der angeregten Schwingung. Wenn nun der Kraftvektor nicht senkrecht zur Oberflläche steht, weil z.B. die Sonde in einer Mulde in der Oberfläche versenkt ist und dabei am Rande der Mulde steht, so ist die Messung mit einem systematischen Fehler behaftet.

EP-A-0536827 (veröffentlicht am 14.4.93) beschreibt einen Sensor zur Vermessung einer Oberflächstruktur durch Kraftmessung mit einer eine Meßspitze aufweisenden Meßsonde, mit einem die Meßsonde tragenden Ausleger, wobei die Meßsonde zu Schwingungen in der Nähe der zu vermessenden Oberfläche angeregt wird und die Störung der Schwingungen durch die Oberfläche gemessen werden. Der Sensor weist zumindest zwei unterschiedliche Schwingungsmoden auf, und die Spitze der Sonde schwingt bei zumidnest zwei unterschiedlichen Schwingungsmoden in unterschiedliche Richtungen.

EP-A-0431040 udn EP-A-0413041 beschreiben Herstellungsverfahren für ultrafeine Siliziumspitzen und für mikromechanische Sensoren für die AFM/STM Porfilometrie. EP-A-0410131 zeigt ein Nahfeld-Lorentzkraftmikroskop, bei dem magnetische Strukturen einer Probe durch kraftinduzierte Verbiegung einer Spitze darstellbar werden.

APPLIED PHYSICS LETTERS, Bd. 57, Nr. 20, 12, November 1990, New York, Seiten 2089 bis 2091 G. Meyer et al.: "Simultaneous Measurement of Lateral and Normal Forces with an Optical-Beam-Deflection Atomic Force Microscope" beschreibt die simultane Messung von lateralen und normalen Kräften mittels der optischen Strahlableitung eines AFM.

Aufgabe der Erfindung ist es nun, einen einfach aufgebauten Sensor zum Einsatz in einem Kraftmikroskop zur Verfügung zu stellen, mit dem die auf die Sonde wirkende Kraft, in X-, y- und z-Richtung weitgehend unabhägig gemesessen werden kann.

Die Aufgabe der Erfindung wird gelöst mit einer Sonde, die in mehreren, aufeinander senkrecht stehenden Richtungen so angeregt werden kann, daß die Resonanzfrequenzen verschiedener Anregungsmoden jeweils in einer Richtung schwingen und bezüglich der Fequenzen voneinander getrennt sind. Eine entsprechende Vorrichtung ist im Patentanspruch 1 angegeben.

Die Maßnahmen der Erfindung haben zunächst einmal die Folge, daß die Krafmessung jeweils die x-, y- und z-Komponente der von der Oberfäche auf den Senor wirkenden Kraft aufnimmt. Nach einer Vermessung der verschiedenen Komponenten liegt also ein Kraftvektor sowohl bezüglich der Richtung als auch bezüglich der Gesamstärke vor.

In der bevorzugten Ausführung werden die x- und die z-Komponente durch transversale Schwingungsmoden, die y-Komponente dagegen durch eine Torsionsschwingung vermessen.

Die vorgenannten, sowie die beanspruchten und in den nachfolgenden Ausführungsbeispielen beschriebenen, erfindungsgemäß zu verwendenden Baugruppen, Einrichtungen und Mittel bzw. Verfahrensschritte unterliegen in ihrer Realisierung, der Ausgestaltung, der Auswahl und den technischen Konzeptionen bzw. den Verfahrensbedingungen keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, in der - beispielhaft - eine erfindungsgemäße Vorrichtung und das erfindungsgemäße Verfahren dargestellt sind:

Fig. 1          ist eine Abbildung des Sensors mit doppeltem Ausleger;

Fig.2 a)-c)     zeigt drei Schwingungsmoden in den Richtungen z,x und y;

Fig.3 a),b)     gibt den spektralen Verlauf der Schwingungsampliduden eines erfindungsgemäßen Sensors im ungestörten Zustand aufgetragen über der Anregungsfrequenz wieder;

Fig.4           ist eine schematische Darstellung des Sensors und

Fig.5 a),b)     ist beispielhaft das Ergebnis von Messungen in zwei Richtungen wiedergegeben.

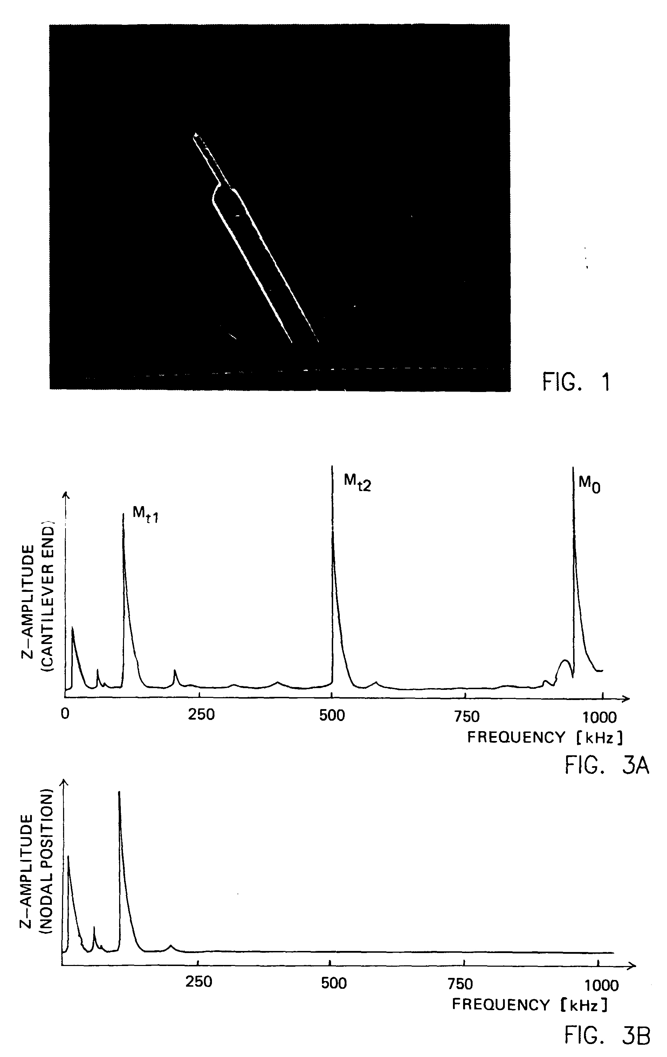

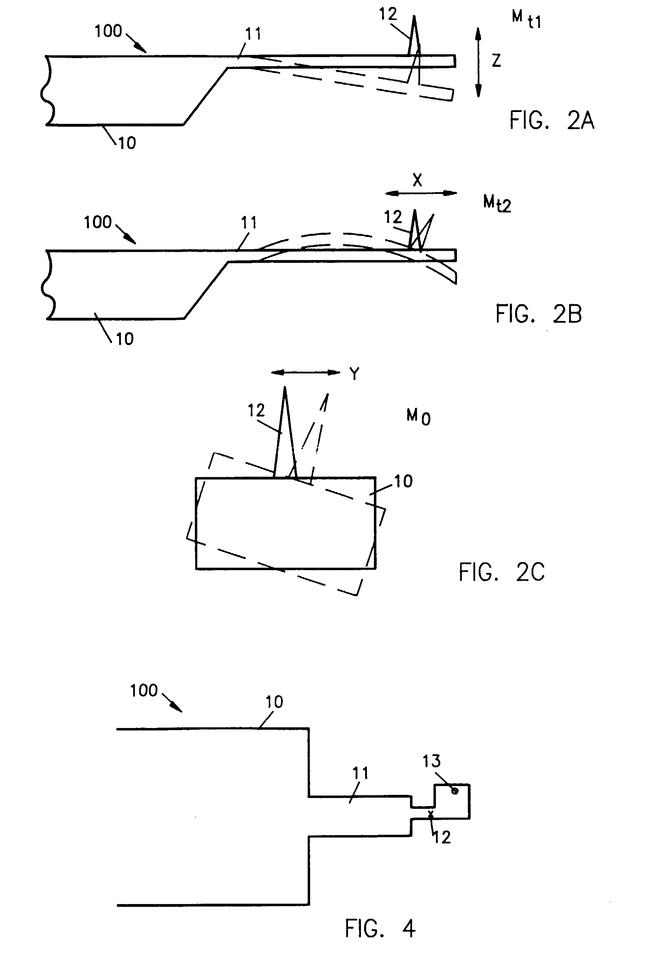

Die in Figur 1 als Ablichtung dargestellte Sensor ist in Figur 2 als Ganzes mit 100 bezeichnet. Der Rumpf 10 des Sensors, auf dem im Ausführungsbeispiel das zur Anregung bestimmte piezoelektrische Element befestigt wird, ist mit einem Ausleger 11 versehen, der sich im Ruhezustand an den Rumpf an der Oberkante glatt anschließt.

Am Ausleger 11 wiederum ist die Spitze 12 angebracht. Die Spitze stellt die eigentliche Sonde dar, mit deren Hilfe die von der Oberfläche wirkende Kraft gemessen wird.

In Figur 2 ist in den Teilen a, b und c der Figur jeweils ein Schwingungsmodus gestrichelt eingezeichnet, und zwar in Fig. 2a der zur Messung der z-Komponente der Kraft bestimmte transversale Schwingungsmodus Tl, in Fig. 2b der

3

zur Messung der x-Komponente der Kraft bestimmte transversale Schwingungsmodus T2 und in Fig.2c der zur Messung der y-Komponente der Kraft torsionale Schwingungsmodus $\Phi 1$. Im Ausführungsbeispiel steht die z-Richtung senkrecht auf der zu vermessenden Oberfläche.

Der torsionale Schwingungsmodus wird im Ausführungsbeispiel dadurch anregbar, daß die Masse auf dem Ausleger 11 unsymmetrisch verteilt ist.

Der Sensor zeichnet sich bezüglich seiner mechanischen Auslegung dadurch aus, daß die Frequenzen der einzelnen Schwingungsmoden soweit voneinander getrennt sind, daß keine Kopplung der Moden stattfindet und somit die Schwingungen einzig durch unterschiedliche Anregungsfrequenzen voneinander getrennt sind. Im Ausführungsbeispiel wird eine Güte von ca. 1000 erreicht; dies ist aber zur Erzielung von brauchbaren Messungen nicht unbedingt nötig. Weiterhin ist der Sensor so ausgelegt, daß die verschiedenen Resonanzfrequenzen sämtlichst in dem für die Kraftmessung zugänglichen Frequenzbereich liegen. Das Resonanzspektrum am Messpunkt 13 des Laserheterodynometers, mit dem die Amplitude der Auslenkung gemessen wird, ist in Fig. 3a abgebildet. Die Resonanzfrequenzen liegen dabei soweit auseinander, daß eine Modenkopplung ausgeschlossen ist. In Fig. 3b ist ein Resonanzspektrum am Ort des Schwingungsknotens vermessen, wobei nur in z-Richtung eine Auslenkung möglich ist. Die höheren Schwingungsmoden T2 und $\Phi 1$ bleiben dabei auslenkungsfrei. Aus diesem Grund ist der Messpunkt 13 für die Kraftmessung außerhalb der Spitzenposition gelegt.

Die Auslegung des Sensors wurde im Ausführungsbeispiel wie folgt durchgeführt, wobei zur einfacheren Berechnung die zusätzliche Masse, die der Meßstelle 13 zugeordnet ist, unberücksichtigt blieb. Es wurde von einem rechteckigen Ausleger der Länge L, der Breite b, der Dicke d, einer Spitzenhöhe h, einem Elastizitätsmodul E, einem Schubmodul G, einer Massendichte p, einem Gesamtträgheitsmoment $J_\phi$, einer Drehsteifigkeit $K_\phi$ ausgegangen, wobei sich für die Resonanzfrequenzen näherungsweise ergibt:

$$f_{t1} = \frac{3.52}{2\pi} \frac{d}{L^2}\sqrt{\frac{E}{\rho}}; \; f_{t2} = \frac{22.0}{2\pi} \frac{d}{L^2}\sqrt{\frac{E}{\rho}}; \; f_\phi = \frac{1.57}{2\pi} \sqrt{\frac{GK_\phi}{J_s L}};$$

$K_\phi$ und $J_\phi$ sind gegeben durch:

$$K_\phi = bd^3 (\frac{16}{3} - 3.36 \frac{d}{b} (1 - \frac{d^4}{12 b^4})); \; J_\phi = \frac{\rho}{12} dbL(b^2 + d^2) + J_{tip}$$

Im Ausführungsbeispiel übersteigt das Trägheitsmoment $J_{tip}$ der Spitze den entsprecheneden Wert des Auslegers und wird einfach eingesetzt. Für die Berechnung wird eine (transversale) Federkonstante des Sensors an der Stelle der Spitze wie folgt angenommen:

$$k_{t1} = Eb \frac{d^3}{4L^{\#3}} \simeq 2.05 Eb \frac{d^3}{4L^3}$$

Für den zweiten transversalen Schwingungsmodus gibt es keine statische Federkonstante. Es kann aber ein dynamischer Kraftbeiwert definiert werden als das Verhältnis zwischen der Schwingungsamplitude durch die Güte Q mal der periodischen Kraft bei $f_{t2}$. Für einen homogenen Ausleger gilt somit

$$k_{t2}^{\#} \simeq (\frac{f_{t2}}{f_{t1}})^2 k_{t1} \simeq 39 k_{t1}$$

Bei einem solchen Sensor ist die Spitze am Schwingungsknoten positioniert. Bei der Berücksichtigung der Höhe der Spitze ist die effektive Federkonstante $k_{t2}$ in y-Richtung dann

$$k_{t2} \simeq \frac{10.8 L}{h + 0.5d} k_{t1}$$

In diesen Berechnungen wurde die begrenzte Steifigkeit und die Masse der Spitze vernachlässigt.
Für die Federkonstante der Drehbewegung des Auslegers gilt:

$$k_\phi = \frac{K_\phi G}{L(h + \frac{d}{2})^2}$$

Das Ausführungsbeispiel hat somit folgende Werte, wobei ein Siliziumsensor mit den Massen 60 x 3 x 3 μm und eine Spitzenhöhe von 25 μm angenommen wurde.

$M_{t1}$:      1.16 MHz und 32 N/m
$M_{t2}$:      7.24 MHz und 325 N/m
$M_\Phi$:      19 MHz und 16 N/m.

Die Abschätzung der torsionalen Resonanzfrequenz ist in hohem Maße abhängig von der Größe und der Form der Spitze.

Insbesondere das Verhältnis der beiden transversalen Resonanzfrequenzen kann durch Änderungen am Ausleger leicht angepaßt werden. Beispielsweise kann durch eine Verjüngung des Auslegers das Verhältnis reduziert werden.

Die Sensitivität der Kraftfeldmessung mit dem Sensor ist

$$\nabla F_{min} = \frac{1}{A_0}\sqrt{\frac{27\, k k_b TB}{2\pi Q \nu_{res}}}$$

$A_0$:    Schwingungsamplitude
k:      Federkonstante
$k_b$:    Boltzmannkonstante
T:      Temperatur
B:      Bandbreite
Q:      Güte

Die Güte kann durch eine Erhöhung der Federkonstante des jeweiligen Resonanzmodus erhöht werden. Aus Fig. 3 sind Werte von 500, 1000 und 1500 für den ersten transversalen, den zweiten transversalen und den torsionalen Modus zu entnehmen. Die Sensitivität der beiden transversalen Moden ist somit ungefähr $10^{-5}$ N/m und die des torsionalen Modus $10^{-6}$ N/m.

Der Lasersensor arbeitet nach dem bekannten Prinzip des Heterodyn Interferometers, bei dem ein Laserstrahl, von dem insbesondere die Eigenschaft der Kohärenz ausgenutzt wird, in zwei Teilstrahlen geteilt wird und ein Teilstrahl an der Oberfläche des Sensors 100, am Auslesepunkt 13 reflektiert wird. Die beiden Teilstrahlen werden anschließend, als Ausführungsbeispiel an einem halbdurchlässigen Spiegel, an dem auch die Strahlteilung erfolgte, wieder vereinigt. Mit diesem wiedervereinigten Strahl wird dann ein Detektor beaufschlagt, der die Interferenz der beiden Teilstrahlen zu messen in der Lage ist. In diesem Ausführungsbeispiel wird mit einer Rückstellogik, die aus einer diskreten Schaltung oder aus einem in einen Rechner integrierten Regelkreis bestehen kann, das piezoelektrische Element zur Anregung des Sensors so nachgeregelt, daß der Sensor weiterhin bei der - nunmehr durch die durch die zu vermessende Oberfläche gestörte - Resonanzfrequenz schwingt. Die Regelgröße stellt dabei den Meßwert dar, der als Dunkel- oder Graustufe in einer die Oberfläche wiedergebende Karte eingetragen wird.

In einer alternativen Ausführung wird nicht die Frequenz nachgeregelt, sondern die Amplitude der Schwingung dient direkt als Maß für die Kraft, die von der Oberfläche auf die Sonde einwirkt. Dabei wird in Kauf genommen, daß nur ein begrenzter dynamischer Meßbereich erfaßbar ist, da nur solche Kräfte meßbar sind, bei denen die Resonanz an ihrer ungestörten Frequenz noch meßbar über dem Rauschen hervorgehoben ist.

Anschließend an den Meßvorgang wird die zu vermessende Oberfläche - im Ausführungsbeispiel mit einem piezoelektrischen Stellelement - an eine neue Position gebracht und der Meßvorgang wird wiederholt, bis eine Zeile der Oberfläche vorliegt. Der zu vermessende Gegenstand wird dann mit einem piezoelektrischen Stellelement in eine neue Zeile verbracht und somit wird die gesamte Oberfläche abgefahren.

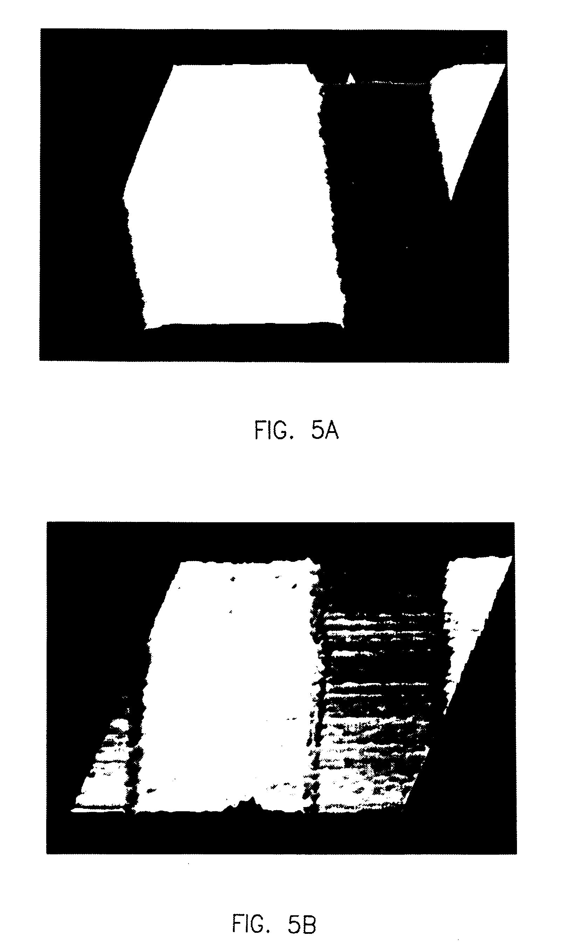

Nach der Vermessung der Oberfläche mit einem Schwingungsmodus wird der Sensor in dem nächsten Schwingungsmodus angeregt und die gesamte Meßprozedur wird wiederholt, bis alle gewünschten Komponeten des Kraftfeldes vermessen sind. Die Komponenten, von denen zwei in jeweils einem Bild in Figur 5 a) und b) dargestellt sind, können dann mit Hilfe einer arbeitungsanlage und bekannten Verfahren zur Bildauswertung verarbeitet werden. Hierbei bietet sich insbesondere an, Unterschiede der Richtung des Kraftfeldes bildlich und analytisch herauszustellen.

In einer alternativen Ausführungsform werden an jedem Meßpunkt nacheinander die verschiedenen Schwingungsmoden angeregt, bevor die Position - wie beschrieben - mit dem piezoelektrischen Stellglied nachgeführt wird.

EP 0 611 945 B1

Die experimentellen Ergebnisse einer Probemessung sind in Figur 5 wiedergegeben. Da die Spitze im Experiment nicht genau im Schwingungsknoten der zweiten transversalen Schwingung befestigt war, sind die Schwingungen in den drei Richtungen nicht völlig entkoppelt. Außerdem war die torosionale Steifigkeit des Sensors wesentlich höher als die transversale.

Immerhin ist mit dem Experiment die Durchführbarkeit demonstriert.

Fig.5 a) zeigt die Messung in z-Richtung in einer Höhe von 70nm über der Oberfläche von Silizium. Das Ergebnis der Torsionsschwingung ist in Fig. 5 b) gezeigt. Deutlich zu sehen ist die Änderung der Amplitude, wenn die Spitze eine Stufe erreicht, an der eine horizontale Komponete die vertikale Komponente der Kraft überlagert.

## Patentansprüche

1. Sensor zur Vermessung einer Oberflächenstruktur durch Kraftmessung,
   mit einer eine Meßspitze aufweisenden Meßsonde (12),
   mit einem die Meßsonde tragenden Ausleger (11), wobei die Meßsonde zu Schwingungen in der Nähe der zu vermessenden Oberfläche angeregt wird und die Störung der Schwingungen durch die Oberfläche gemessen werden,
   wobei der Sensor zwei transverale Schwingungsmoden und einen torsonialen Schwingungsmodus aufweist und die Spitze der Sonde (12) bei jeder der drei Schwingungsmoden in jeweils eine Richtung schwingt, wobei die drei Richtungen jeweils zueinander senkrecht stehen und eine Schwingungsrichtung die Richtung der Spitze der Sonde aufweist,
   und wobei der Sensor mechanisch so ausgelegt ist, daß die Resonanzfrequenzen der einzelnen Schwingungsmoden voneinander getrennt sind, und
   mit einem piezoelektrischen Element, das die drei Schwingungsmoden durch unterschiedliche Anregungsfrequenzen einzeln anregt.

2. Sensor nach Anspruch 1, dadurch gekennzeichnet,daß Ausleger und Sonde (12) aus Silizium bestehen.

3. Sensor nach Anspruch 1, dadurch gekennzeichent, daß Ausleger und Sonde (12) aus Siliziumnitrid bestehen.

4. Sensor anch einem der Ansprüche 1 bis 3, dadurch gekennzeichnet, daß die Sonde (12) magnetische Eigenschaften aufweist.

5. Kraftmikroskop mit einem Sensor nach einem der Anspüche 1 bis 4,

   - mit einem piezoelektrischen Vibrierelement,

   - mit einer Lasermeßeinrichtung und

   - mit einer Einrichtung zur Nachführung der zu vermessenden Oberfläche gegenüber dem Sensor.

6. Verfahren zur Vermessung von Oberflächen, dadurch gekennzeichnet, daß ein Sensor entsprechend einem der Anspüche 1 bis 5 nacheinander in Schwingung verschiedener Moden versetzt wird und die Änderung der Resonanzfrequenz durch die Wechselwirkung der Sonde des Sensors mit der Oberfläche gemessen wird.

7. Verfahren nqch Anspruch 6, dadurch gekennzeichnet, daß die Änderung der Resonanzfrequenz mit einem Heterodynlaser-Messverfahren durchgeführt wird.

8. Verfahren nach Anspuch 6 oder 7, dadurch gekennzeichnet, daß der zu mikroskopierende Gegenstand nach jedem Messvorgang in eine neue Position gegenüber dem Mikroskop nachgeführt wird.

## Claims

1. Sensor for imaging a surface structure by force measurement,

   with a measurement probe (12) comprising a measurement tip,

with an arm (11) on which the measurement probe is mounted, whereby the measurement probe is induced to vibration in the vicinity of the surface to be imaged and the influence on the vibrations by the surface is measured,

whereby the sensor comprises two transversal vibration modes and one torsional vibration mode, and that the tip of the probe (12) in each of the three vibration modes vibrates in one respective direction, whereby the three directions are orthogonal to each other and one vibration direction represents the direction of the tip of the probe,

whereby the sensor comprises two transversal vibration modes and one torsional vibration mode, and that the tip of the probe (12) in each of the three vibration modes vibrates in one respective direction, whereby the three directions are orthogonal to each other and one vibration direction represents the direction of the tip of the probe,

and whereby the sensor is mechanically designed such that the resonance frequencies of the individual vibration modes are separated from one another, and

with a piezoelectric element that excites the three vibration modes individually by different excitation frequencies.

2. Sensor according to Claim 1, characterized in that arm and probe (12) are made of silicon.

3. Sensor according to Claim 1, characterized in that arm and probe (12) are made of silicon nitride.

4. Sensor according to any one of the Claims 1 to 3, characterized in that the probe (12) has magnetic properties.

5. Force microscope with a sensor in accordance with any one of the Claims 1 to 4

- with a piezoelectric vibration element,

- with a laser measurement device, and

- with a device for adjusting the surface to be imaged with respect to the sensor.

6. Method for imaging surfaces, characterized in that a sensor in accordance with any one of the Claims 1 to 5 is induced to vibration successively in different modes and the change in the resonant frequency due to the interaction of the sensor probe with the surface is measured.

7. Method in accordance with Claim 6, characterized in that the change in the resonant frequency is conducted using a heterodyne laser measurement method.

8. Method in accordance with Claim 6 or 7, characterized in that the object to be examined microscopically is adjusted to a new position with respect to the microscope after each measurement procedure.

**Revendications**

1. Capteur de mesure d'une structure de surface par mesure de force,

avec une sonde de mesure (12) présentant une pointe de mesure,

avec un bras articulé (11) portant la sonde de mesure, la sonde de mesure étant excitée en vibrations à proximité de la surface à mesurer et la perturbation des vibrations, exercée par la surface, étant mesurée,

le capteur présentant deux modes oscillatoires transversaux et un mode oscillatoire en torsion et la pointe de la sonde (12) oscillant pour chacun des trois modes oscillatoires chaque fois dans une direction, les trois directions étant perpendiculaires les unes aux autres et une direction oscillatoire présentant la direction de la pointe de la sonde,

et le capteur étant conçu, mécaniquement, de manière que les fréquences de résonance des différents modes oscillatoires soient séparés les uns des autres, et

avec un élément piézoélectrique excitant individuellement les trois modes oscillatoires au moyen de fréquences d'excitation différentes.

2. Capteur selon la revendication 1, caractérisé en ce que le bras articulé et la sonde (12) sont en silicium.

3. Capteur selon la revendication 1, caractérisé en ce que le bras articulé et la sonde (12) sont en nitrure de silicium.

4. Capteur selon l'une des revendications 1 à 3, caractérisé en ce que la sonde (12) présente des propriétés magnétiques.

5. Microscope à force ayant un capteur selon l'une des revendications 1 à 4,

   - avec un élément vibrant piézoélectrique,

   - avec un dispositif de mesure laser, et

   - avec un dispositif de poursuite de la surface à mesurer, par rapport au capteur.

6. Procédé de mesure de surfaces, caractérisé en ce qu'un capteur, réalisé selon l'une des revendications 1 à 5, est mis en vibration successivement selon différents modes et la modification de fréquence de résonance imputable à l'effet mutuel de la sonde du capteur avec la surface étant mesurée.

7. Procédé selon la revendication 6, caractérisé en ce que la mesure de la modification de la fréquence de résonance est conduite avec un procédé de mesure par laser hétérodyne.

8. Procédé selon la revendication 6 ou 7, caractérisé en ce que l'objet à examiner au microscope est replacé après chaque processus de mesure dans une nouvelle position par rapport au microscope.

FIG. 1

FIG. 3A

FIG. 3B

$M_{t1}$

Z

FIG. 2A

$M_{t2}$

X

FIG. 2B

Y

$M_0$

FIG. 2C

FIG. 4

FIG. 5A

FIG. 5B